# EUROPEAN PATENT SPECIFICATION

(11) **EP 3 819 856 B1**
(45) Date of publication and mention of the grant of the patent: **15.10.2025**
(21) Application number: 19829966.1
(22) Date of filing: 04.06.2019
(51) Int. Cl.: G06Q 50/02, G06Q 10/00, G06Q 10/0631, G06Q 10/0637, A01G 9/24

(54) **INFORMATION PROCESSING DEVICE, INFORMATION PROCESSING SYSTEM, AND PROGRAM**
INFORMATIONSVERARBEITUNGSVORRICHTUNG, INFORMATIONSVERARBEITUNGSSYSTEM UND PROGRAMM DAFÜR
DISPOSITIF DE TRAITEMENT D'INFORMATIONS, SYSTÈME DE TRAITEMENT D'INFORMATIONS ET PROGRAMME

(30) Priority: 02.07.2018 JP 2018126001
(43) Date of publication of application: 12.05.2021
(73) Proprietor: Bayer CropScience K.K., Tokyo 100-8268 (JP)
(72) Inventor: ITO Satoshi, Tokyo 150-8360 (JP)
(74) Representative: BIP Patents
(86) International application number: PCT/JP2019/022084
(87) International publication number: WO 2020/008777

(56) References cited:
- EP-A1- 3 550 498
- WO-A1-2018/047726
- WO-A1-2018/047726
- US-A1- 2016 232 621
- US-B1- 9 563 852

## Description

### Technical Field

The present invention relates to an information processing device, an information processing system, and a program.

### Background Art

A factor on which harvest of crops depends can include the occurrence of pests. In recent years, techniques for protecting crops against these pests have been studied and developed using the information communication technique. The pest includes three stages of the infection to the crop, the incubation, and the disease onset (occurrence), and various techniques that put the prediction of the occurrence of pests to work in the efficient production of agricultural crops have been developed. PTL 1 and PTL 2 disclose techniques of predicting the occurrence of pests. These are techniques of searching a condition leading to the occurrence of pests from past environment information, cultivation information on the crops, and the like. Based on this pest occurrence prediction, farming households protect the crops against pests by spraying agricultural chemical, for example.

### Citation List

### Patent Literature

PTL 1 : JP-A-11-287871
PTL 2 : JP-A-2003-167975
PTL 3 : JP-A-2009-106261

### Summary of Invention

### Technical Problem

However, spraying the agricultural chemical is more effective when being performed before and after the infection of the pests or before the infection than the disease onset (occurrence) of pests. For example, PTL 3 discloses a technique of predicting disease damage that may cause the infection, and selecting an optimal agricultural chemical. Accordingly, it is important to grasp a relation between the infection and the disease onset for predicting the infection of disease damage. Meanwhile, PTL 3 has no specific description related to the infection estimation of disease damage. It is difficult to detect the infection unlike the disease onset, and is not easy to perform a future infection prediction by estimating infection timing from the disease onset timing. In particular, it is difficult to estimate infection timing in the data before the disease onset in which conditions leading to the infection of disease damage and conditions not leading to the infection of disease damage are mixed. With the reason as the above, an improvement in accuracy of the infection estimation with respect to the pests has been desired for protecting the crops against the pests.

EP3550498 describes an information processing apparatus and system aimed at improving the accuracy of determining the occurrence of pest and disease damage in crops using machine learning which collects cultivation information, pest and disease occurrence data, and environmental data through sensors and weather information servers to predict pest and disease occurrences.

Therefore, the present invention is made in view of the abovementioned problems, and an object of the present invention is to provide a novel and improved information processing device capable of estimating an event occurrence time when an event caused by the pest and leading to damage to the crop has occurred.

### Solution to Problem

The invention is defined by the independent claims.

In order to solve the abovementioned problems, with an aspect of the present invention, provided is an information processing device including an acquisition unit that acquires pest occurrence information including information on an occurrence time of damage to a crop caused by a pest and environment information including an cultivation environment for the crop; an event period determining unit that determines, using the pest occurrence information, an estimated event occurrence period during which an event leading to the occurrence of the damage to the crop is suspected to have occurred and an event-free period during which the event leading to the occurrence of the damage has not occurred; and an event estimation unit that estimates, by comparing the environment information in the estimated event occurrence period with the environment information in the event-free period, an event occurrence time when the event has occurred from the estimated event occurrence period.

Moreover, in order to solve the abovementioned problems, with another aspect of the present invention, provided is a program for causing a computer to function as: an acquisition unit that acquires pest occurrence information including information on an occurrence time of damage to a crop caused by a pest and environment information including an cultivation environment for the crop; an event period determining unit that determines, using the pest occurrence information, an estimated event occurrence period during which an event leading to the occurrence of the damage to the crop is suspected to have occurred and an event-free period during which the event leading to the occurrence of the damage has not occurred; and an event estimation unit that estimates, by comparing the environment information in the estimated event occurrence period with the environment information in the event-free period, an event occurrence time when the event has occurred from the estimated event occurrence period.

Moreover, in order to solve the abovementioned problems, with still another aspect of the present invention, provided is an information processing system including: an acquisition unit that acquires pest occurrence information including information on an occurrence time of damage to a crop caused by a pest and environment information including an cultivation environment for the crop; an event period determining unit that determines, using the pest occurrence information, an estimated event occurrence period during which an event leading to the occurrence of the damage to the crop is suspected to have occurred and an event-free period during which the event leading to the occurrence of the damage has not occurred; and an event estimation unit that estimates, by comparing the environment information in the estimated event occurrence period with the environment information in the event-free period, an event occurrence time when the event has occurred from the estimated event occurrence period.

With the abovementioned configurations, it is possible to accurately estimate, by comparing the environment information in the estimated event occurrence period including at least one period during which an event caused by a pest and leading to damage to a crop has occurred with the environment information in the event-free period during which the event caused by the pest and leading to damage to the crop has not occurred, the event occurrence time from the estimated event occurrence period.

### Advantageous Effects of Invention

As has been described in the foregoing, with the present invention, it is possible to accurately estimate an event occurrence time when an event caused by the pest and leading to damage to the crop has occurred.

### Brief Description of Drawings

Fig. 1 is a conceptual diagram illustrating a concept according to an embodiment of the present invention.
Fig. 2 is a conceptual diagram of machine learning to be used in the embodiment.
Fig. 3 is a block diagram illustrating a function and a configuration of an information processing system according to the embodiment.
Fig. 4 is a diagram illustrating one example in which estimation of an event occurrence is performed in the information processing system according to the embodiment.
Fig. 5 is a flowchart illustrating one example of an operation flow of the information processing system according to the embodiment.
Fig. 6 is a flowchart illustrating one example of an operation flow of the information processing system according to the embodiment.
Fig. 7 is a flowchart illustrating one example of an operation flow of the information processing system according to the embodiment.
Fig. 8 is a diagram illustrating one example of a hardware configuration of the information processing system according to the embodiment.

### Description of Embodiment

Hereinafter, with reference to the attached drawings, a preferred embodiment of the present invention will be described in details. It should be noted that in the description and the drawings, the same reference signs are given to the components having substantially the same functions, and overlapped explanations are thus omitted.

### <1. Information Processing System Overview>

### (1. 1. Technical Summary)

The present invention relates to a technique of estimating, based on information at an occurrence time of damage to a crop caused by a pest and environment information on the crop, an event occurrence time when an event caused by the pest and leading to the damage to the crop has occurred.

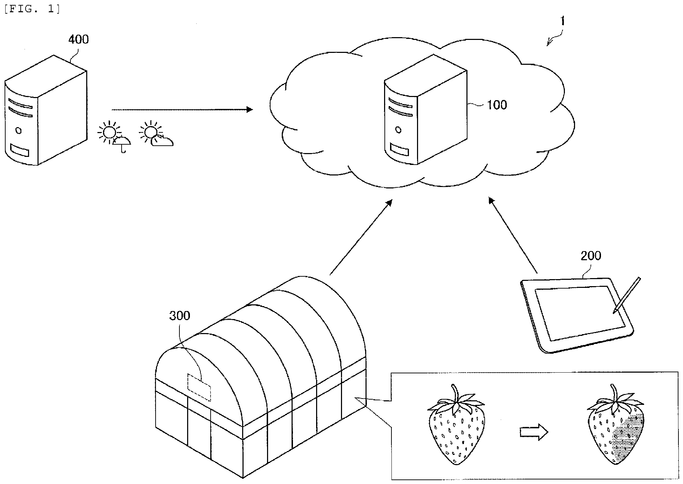

With reference to Fig. 1, an information processing system 1 including an information processing device 100 that estimates the event occurrence time, and other configurations that acquire information necessary for the estimation of the event occurrence, and outputs the information will be described. The information processing system 1 is provided with the information processing device 100, a cultivation sensor 300, a weather server 400, and an information processing terminal 200.

The information processing device 100 acquires, when a pest has occurred in a crop, pest occurrence information input to the information processing terminal 200 by a user or the like, for example. The pest occurrence information discussed herein is information including information when the pest has occurred in the crop, for example. The information processing device 100 estimates, based on this pest occurrence information, and environment information to be acquired from the cultivation sensor 300 to acquire information related to the cultivation in a house for agriculture and the weather server 400, an event occurrence time when an event leading to the occurrence of the damage to the crop has occurred.

The information processing device 100 uses, when estimating the event occurrence time, a machine learning scheme called multiple instances learning. By using this scheme, among events leading to and events not leading to the occurrence of the damage to the crop, which are mixed in the environment information, a feature amount leading to the occurrence of the damage to the crop is extracted, a probability of the occurrence of an event is calculated based on the feature amount, and an event occurrence time is estimated based on the probability with high accuracy.

### (1. 2. Machine Learning)

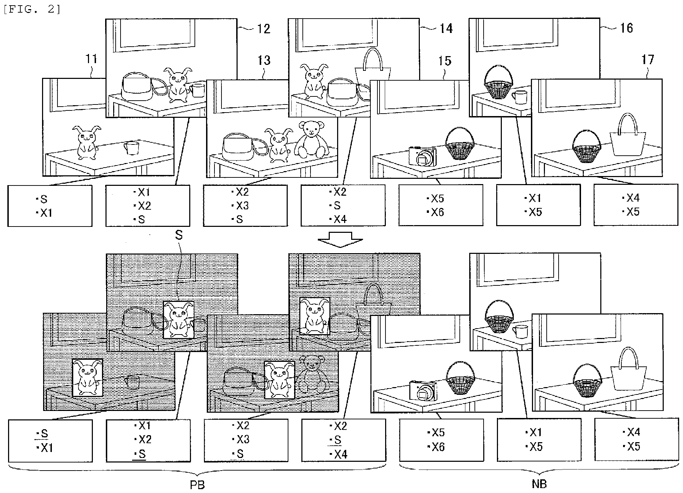

With reference to Fig. 2, a machine learning scheme that uses multiple instances learning will be described. In the present scheme, for example, when a plurality of samples are classified into two classes, it is possible to grasp the reference of the classification. In the present scheme, a plurality of samples are treated as one aggregate (bag). Herein, an explanation is made related to a case where a plurality of samples are classified into two classes, however, the number of classes is not limited to two, but the classification into plural classes, three or more classes, may be performed.

In Fig. 2, a scene 11, a scene 12, a scene 13, a scene 14, a scene 15, a scene 16, and a scene 17, which are seven types of rooms, are illustrated. Each scene includes various items, including an item S, an item X1, an item X2, an item X3, an item X4, or an item X5.

The scene 11 includes the item S and the item X1, and the scene 12 includes the item X1, the item X2, and the item S. The scene 13 includes the item X2, the item X3, and the item S, and the scene 14 includes the item X2, the item S, and the item X4.

The scene 15 includes the item X5 and the item X6, the scene 16 includes the item X1 and the item X5, and the scene 17 includes the item X4 and the item X5.

When these scenes 11 to 17 are set as a plurality of samples, in the present scheme, the scenes 11 to 14 are firstly set as one Bag, and the scenes 15 to 17 are set as another Bag. Specifically, the scenes 11 to 14 are determined as PositiveBag (hereinafter, referred to as PB). On the other hand, the scenes 15 to 17 are determined as NegativeBag (hereinafter, referred to as NB).

Herein, PB includes at least one factor in classifying the scenes into the scenes 15 to 17 and the scenes 11 to 14. On the other hand, NB includes no factor in classifying the scenes into the scenes 15 to 17 and the scenes 11 to 14. In this manner, Bags of PB and NB are determined from a plurality of samples.

In the present scheme, from a plurality of Bags each classified into PB or NB in this manner, by comparing a Bag to be classified into PB with a Bag to be classified into NB, a factor in each Bag that influences the classification into PB and NB is extracted.

In Fig. 2, by comparing Bags to be classified into PB and NB with each other, it is possible to find a fact that PB and NB have been classified based on whether the item S is included. In other words, when the scenes 11 to 14 are compared with the scenes 15 to 17, the scenes 11 to 14 each include the item S, while the scenes 15 to 17 each include no item S. Herein, it is understood that by using the item S as a feature amount that is an influence factor, the scenes 11 to 14 are classified as PB and the scenes 15 to 17 are classified as NB. In the present scheme, PB and NB are compared with each other to find a fact that the feature amount in the classification is S in this manner.

In the present scheme, in a case where a Positive sample including a feature amount and a Negative sample including no feature amount are mixed in PB, it is possible to find the feature amount that allows PB and NB to be divided. Moreover, in the present scheme, by finding the feature amount as the above, it is possible to determine whether an unknown Bag is Positive or Negative. In addition, in the present scheme, it is possible to determine which Bag in the PB is a Positive sample using the feature amount, for example.

By using the scheme as the above, the information processing device 100 according to one embodiment of the present invention compares environment information in an estimated event time occurrence period in which an event leading to the occurrence of damage to a crop is suspected to occur as PB with environment information in an event-free period during which no event has occurred as NB. With this comparison, a feature amount leading to the event occurrence is grasped, and an event occurrence time is estimated from the estimated event time occurrence period.

In addition, in the present invention, machine learning to an event occurrence prediction model based on the event occurrence time is performed. In this manner, machine learning is performed to an event occurrence prediction model, whereby the event occurrence prediction model can be autonomously updated. Accordingly, it is possible to improve the accuracy of calculation of the event occurrence probability.

In addition, in the information processing device 100, with respect to the event occurrence prediction model after the machine learning, environment information on the crop, specifically, a prediction value, a current value, or the like of the environment information to the crop is newly input. Based on these pieces of the environment information, the information processing device 100 can output temporal change in a current or future event occurrence probability with respect to the crop. Note that, it is needless to say that not only the current or the future, an event occurrence probability with respect to the past may be calculated.

### <2. Function Configuration of Information Processing Device>

In the forgoing, the overview of the information processing system according to one embodiment of the present invention has been described. Next, a function configuration of the information processing system 1 according to one embodiment of the present invention will be described. As a specific example, an explanation is made using an example in which when damage to a crop caused by a pest has occurred, an event occurrence time when an event leading to the damage has occurred is estimated. Hereinafter, the explanation is made by regarding the infection to a pest as an event, and a disease onset as the occurrence of damage.

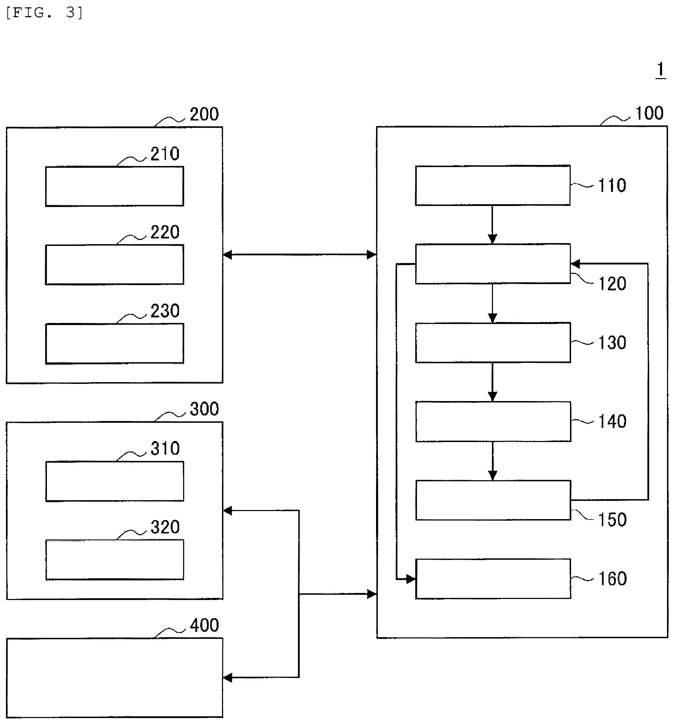

With reference to Fig. 3, the function configuration of the information processing system 1 will be described. Fig. 3 is a block diagram illustrating an example of a schematic function configuration of the information processing system 1 according to one embodiment of the present invention.

As illustrated in Fig. 3, the information processing system 1 is provided with the information processing device 100, the information processing terminal 200, the cultivation sensor 300, and the weather server 400. In the information processing system 1, the information processing device 100 performs pest infection prediction on crops, using information to be acquired from the information processing terminal 200, the cultivation sensor 300, or the weather server 400. Hereinafter, the information processing terminal 200, the cultivation sensor 300, and the weather server 400 that acquire necessary information when the information processing device 100 performs information processing will be firstly described in this order.

### (Information Processing Terminal)

The information processing terminal 200 is provided with an input unit 210, a display unit 230, and a communication unit 220. The information processing terminal 200 has a function of acquiring pest occurrence information, and the acquired pest occurrence information is output to an acquisition unit 110 of the information processing device 100. The information processing terminal 200 may be a mobile terminal such as a smartphone, or may be an information processing device such as a computer. Note that, the pest occurrence information does not necessarily need to be acquired via the information processing terminal 200, but an acquisition method thereof is not limited as long as the information processing device 100 can acquire the pest occurrence information.

### ((Input Unit))

The input unit 210 receives, by an input or the like by a user, pest occurrence information including information when disease damage or the like caused by a pest has occurred in a crop. The pest occurrence information includes information on a disease onset date and time when disease damage or the like caused by the pest has occurred in the crop. The disease onset indicates that the occurrence of damage with respect to the crop, or the occurrence of an infection symptom caused by the pest with the end of an incubation period after the infection, is detected or recognized. For example, the determination of the disease onset may be made, when a sensor or the like that observes a growth situation of the crop is provided, based on information detected by the sensor or the like, or may be made by the user recognizing the disease onset to the crop when observing the crop. Moreover, the time of the disease onset represents an arbitrary period including the time when the disease onset has been determined, or may be the date of disease onset or the time of disease onset.

The pest occurrence information includes, in addition to information on the date and time of the disease onset of disease damage or the like caused by the pest, information related to the type of the pest having occurred. Specifically, the pest occurrence information includes information on a microbial disease, a pest disease, a physiological disorder, a physiological disorder caused by weeds, and the like. In addition, the pest occurrence information includes information on further details of the various kinds. For example, in the case of the microbial disease, information on the type of the disease, such as gray mold, or leaf mold, is included.

Moreover, the pest occurrence information further includes information on the incubation period from infection or parasitic of the pest to the disease onset. The incubation period of disease damage indicates the number of days that is required from the infection of disease damage to the disease onset, and an incubation period of insect damage indicates a period during which an insect lays eggs, a larva is hatched from the egg, and a disease onset (or insect damage occurrence) is recognized by a crop being eaten, for example. In other words, the incubation period indicates a period before the damage to the crop caused by the pest has occurred. This incubation period may be information that can be acquired from a pest occurrence history, documents, the investigation, or the like.

Moreover, the information processing terminal 200 may acquire not only the pest occurrence information, but also environment information in a space where the crop is cultivated and environment information on a cultivation status of the crop cultivation (hereinafter, generally referred to as environment information). Note that, environment information to be acquired in the information processing terminal 200 may be information that is difficult to be detected by the cultivation sensor 300, which is described later.

Examples of environment information to be acquired in the information processing terminal 200 can include a cultivation status of a crop. The cultivation status of the crop specifically includes information, such as the kind of the crop, the altitude of the cultivation place of the crop, the type of soil, the nutrient state of the soil, the seeding date and time of the crop, the planting date and time, the status of leaf picking of leaves of the crop, the spray history of a chemical agent, the residual efficacy status of the chemical agent, the status of weeding, the status of tree vigor, or the growth stage of the crop.

In a case where environment information is acquired in the information processing terminal 200, for example, work of auxiliary input by a user or the like may be performed. In other words, environment information may be acquired by the information processing system 1, by not only information to be acquired by the cultivation sensor 300, which is described later, but also information to be acquired by the information processing terminal 200. Environment information to be acquired by the information processing terminal 200 or the cultivation sensor 300 may be environment information including a past history, or may be environment information indicating a current value or a prediction value.

### ((Communication Unit))

The communication unit 220 has a function of acquiring pest occurrence information or environment information input in the input unit 210, and outputting the pest occurrence information or the environment information to the information processing device 100. Moreover, the communication unit 220 also has a function of acquiring information processed by the information processing device 100, and outputting the information to the display unit 230. The communication unit 220 may, when acquiring pest occurrence information or environment information, perform communication as appropriate or may continuously perform communication. Moreover, the communication unit 220 may perform communication in response to an instruction by the information processing device 100.

### ((Display Unit))

The display unit 230 has a function of outputting information output from the communication unit 220. For example, the display unit 230 shows a user an infection probability predicted in the information processing device 100.

### (Cultivation Sensor)

The cultivation sensor 300 has a function of acquiring environment information on a space where a crop is cultivated. The cultivation sensor 300 is provided with a sensor unit 310 that senses environment information, and a communication unit 320 that outputs the sensed environment information.

### ((Sensor Unit))

The sensor unit 310 senses environment information. The sensor unit 310 may include, for example, a thermometer, a hydrometer, a solar radiation meter, a carbon dioxide concentration meter, a moisture percentage meter that measures the moisture percentage of soil, and the like.

The space where the crop is cultivated in the environment information to be acquired by the cultivation sensor 300 may be a space that surrounds a place where the crop is cultivated, and may be, for example, an agricultural facility such as a plastic greenhouse, in which the crop cultivation is performed. The space does not need to be surrounded, as long as it is a place where the crop is cultivated, and may be an open space such as a field or a rice field.

The cultivation sensor 300 acquires environment information on, for example, the ambient temperature, the humidity, the amount of solar radiation, and the carbon dioxide concentration in a surrounding environment of the crop, and the moisture percentage of the soil in which the crop is cultivated.

### ((Communication Unit))

The communication unit 320 has a function of outputting environment information acquired in the sensor unit 310 to the information processing device 100. The communication unit 320 may perform communication as appropriate or may continuously perform communication when the environment information is acquired. Moreover, the communication unit 320 may perform communication in response to an instruction by the information processing device 100.

### (Weather Server)

The weather server 400 has a function of outputting environment information related to the weather in an area where a crop is cultivated. The environment information to be output can include the ambient temperature, the humidity, the amount of solar radiation, the amount of rainfall, and the like. The weather server 400 may selectively output information to be used in the information processing device 100 in response to a demand by the information processing device 100. Environment information to be output by the weather server 400 may be a past history or may be a current value or a prediction value of the environment information.

### (Information Processing Device)

The information processing device 100 mainly has a function of acquiring information output by the information processing terminal 200, the cultivation sensor 300, and the weather server 400, and estimating an infection time when an infection leading to the disease onset of disease damage or the like to the crop caused by the pest has occurred. The information processing device 100 is provided with the acquisition unit 110, a storage unit 120, an estimated infection period determination unit 130, an infection occurrence estimation unit 140, a machine learning unit 150, and an infection occurrence prediction unit 160.

### ((Acquisition Unit))

The acquisition unit 110 has a function of acquiring environment information output by the information processing terminal 200, the cultivation sensor 300, and the weather server 400, and disease damage occurrence information. The acquired environment information and disease damage occurrence information are stored in the storage unit 120.

### ((Storage Unit))

The storage unit 120 has a function of storing therein the information acquired by the acquisition unit 110. Specifically, the storage unit 120 stores therein the disease damage occurrence information and the environment information acquired by the acquisition unit 110. Moreover, the storage unit 120 further stores therein parameters related to machine learning in the infection estimation, which is described later, an infection prediction model, and the like.

### ((Estimated Infection Period Determination Unit))

The estimated infection period determination unit 130 has a function of determining, using pest occurrence information, an estimated infection period during which infection leading to a disease onset to a crop is suspected to have occurred and an infection-free period during which no infection leading to the disease onset has occurred.

The estimated infection period may be a period including at least one period during which infection leading to a disease onset to a crop has occurred. The estimated infection period may specifically include a date and time when the infection to the crop has occurred. Moreover, the estimated infection period may include a plurality of periods during which the infection to the crop occurs.

The estimated infection period may include the date and time when the infection has occurred and the date and time when no infection has occurred in a mixed manner. As for the estimated infection period, for example, the estimated infection period determination unit 130 may determine a period going back by the number of days of the incubation period of the pest from the disease onset time as an estimated infection period. The estimated infection period only needs to include a period during which the infection occurs, and may be determined as appropriate in accordance with the type of the pest and the accuracy necessary for infection prediction. For example, in a case where there is a possibility that an incubation period of a known pest may change in accordance with the environment or the like, the longer incubation period may be set to make the estimated infection period longer.

Meanwhile, the estimated infection period determination unit 130 may determine a period during which no occurrence of the infection is known as an infection-free period. For example, the estimated infection period determination unit 130 determines a period going back by at least the incubation period of the pest from the time point when no disease onset is recognized as an infection-free period. The infection-free period may be a period including continuous infection-free dates and times, or may be a period in which an arbitrary date and time is used as one time point. Moreover, as an infection-free period, a plurality of dates and times using the arbitrary date and time as one time point may be determined.

### ((Infection Occurrence Estimation Unit))

The infection occurrence estimation unit 140 has a function of comparing environment information in the estimated infection period determined by the estimated infection period determination unit 130 with environment information on the infection-free period, and estimating an infection time when the infection has occurred from the estimated infection period.

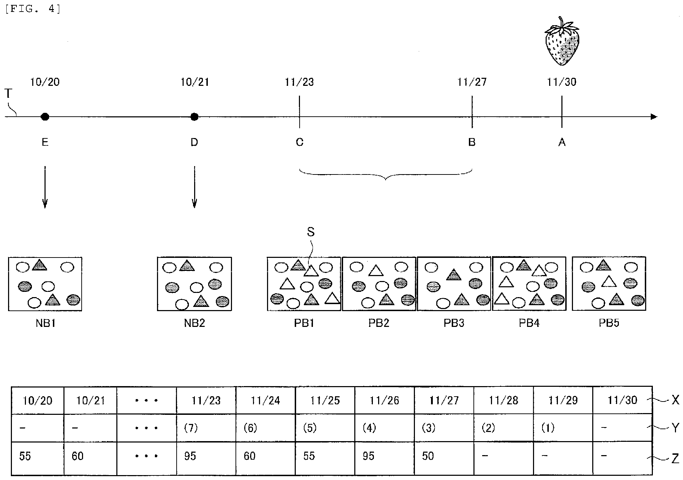

With reference to Fig. 4, the infection estimation in the infection occurrence estimation unit 140 will be specifically described. In Fig. 4, a time axis T is illustrated. Herein, a disease onset time point A is firstly set on 30 November. In a case where the incubation period of the pest is between 3 to 7 days, a start point C in the estimated infection period is 23 November going back 7 days, that is the longest number of days of the incubation period, from the disease onset date and time A. Moreover, an end point B in the estimated infection period is 27 November going back 3 days, that is the shortest number of days of the incubation period, from the disease onset date and time A.

Meanwhile, the infection-free period may be a date and time in which no occurrence of the infection is known, and may be determined as appropriate as long as it is a period before at least the start point C in the estimated infection period. Moreover, the infection-free period may be a period other than the estimated infection period. In Fig. 4, the infection-free period is determined as a date and time D before the start point C in the estimated infection period, in other words, 21 October, and as a date and time E, in other words, 20 October.

The infection occurrence estimation unit 140 designates and compares environment information in the estimated infection period and environment information in the infection-free period with each other. The environment information in the estimated infection period and the environment information in the infection-free period are respectively designated as PositiveBag (PB) and NegativeBag (NB) . Moreover, the estimated infection period is 5 days from 23 November to 27 November.

Herein, each environment information corresponding to the date and time to be classified into PB is designated as PB1 for 23 November, is designated as PB2 for 24 November, is designated as PB3 for 25 November, is designated as PB4 for 26 November, and is designated as PB5 for 27 November. Meanwhile, each environment information corresponding to the date and time to be classified into NB is designated as NB1 for 20 October, and is designated as NB2 for 21 October.

Factors included in environment information are schematically illustrated as white circles, black circles, black triangles, and white triangles. As for the date and time that is set as the infection-free period, the environment information NB1 on the date and time E of 20 October includes four white circles, two black circles, and two black triangles, and the environment information NB2 on the date and time D of 21 October includes four white circles, three black circles, and two black triangles. Meanwhile, as for the date and time that is set as the estimated infection period, the environment information PB1 on 23 November includes four white circles, two black circles, two black triangles, and three white triangles, and the environment information PB2 on 24 November includes four white circles, three black circles, one black triangle, and one white triangle. Similarly, the environment information PB3 on 25 November includes three white circles, three black circles, and two black triangles, the environment information PB4 on 26 November includes four white circles, two black circles, two black triangles, and three white triangles, and the environment information PB5 on 27 November includes three white circles, three black circles, two black triangles, and one white triangle.

Herein, the infection occurrence estimation unit 140 compares the environment information NB1 and environment information NB2 in the infection-free period, with the environment information PB1 to environment information PB5 in the estimated infection period. The infection occurrence estimation unit 140 grasps, with this comparison, that each of the environment information NB1 and the environment information NB2 in the infection-free period includes no white triangle, while each of the environment information PB1 to the environment information PB5 in the estimated infection period includes a white triangle. Accordingly, among the factors of the environment information, the white triangle is extracted as a feature amount S leading to a disease onset.

The infection occurrence estimation unit 140 further calculates, using the extracted feature amount S, the infection probability caused by change in the feature amount S, in the estimated infection period. Fig. 4 illustrates a date and time X in the infection-free period and in the estimated infection period, the number of days Y going back to each date and time from the disease onset to the crop, and change Z in the feature amount at each date and time, as a table. Note that, specifically, in Fig. 4, the feature amount S is illustrated as the humidity (%).

When the column of the change Z in the feature amount is focused, the humidity (%) is 95% on 23 November, 60% on 24 November, 55% on 25 November, 95% on 26 November, and 50% on 27 November. On the other hand, the humidity in the infection-free period is 55% on 20 October, and 60% on 21 October. By using these feature amounts S, the infection occurrence estimation unit 140 estimates an infection time in the estimated infection period.

For example, in the example illustrated in Fig. 4, the higher humidity results in the higher infection probability, so that 23 November and 26 November at which the humidity was the highest value in the estimated infection period are estimated as the infection time. The example in which the higher value of the feature amount results in the higher infection probability has been employed in this example, however, a case where the lower value of the feature amount results in the higher infection probability may be employed.

In addition, an occurrence probability of the infection may be calculated in accordance with the type of the feature amount and the change transition in the feature amount, such as a case where as the more abrupt change in the feature amount results in the higher occurrence probability and other cases. Moreover, the infection occurrence estimation unit 140 may estimate a plurality of infection dates and times in this manner or may estimate one date and time, in the estimated infection period.

The infection occurrence estimation unit 140 may set a threshold value of the infection probability, and may determine whether the infection has occurred. For example, in a case where the infection probability higher than the threshold value is indicated, the infection time may be estimated. On the other hand, in a case where the infection probability lower than the threshold value is indicated, the infection occurrence estimation unit 140 may again calculate the infection probability.

In addition, in order to enhence the reliability of the estimated infection time, the infection occurrence estimation unit 140 may have a function of determining whether the estimated infection time is appropriate, and selecting an appropriate infection time. For example, in a case where a plurality of infection dates and times are estimated in the estimated infection period, the infection occurrence estimation unit 140 may determine the estimated infection times as being not appropriate, and may select a more reliable infection time among the plurality of infection times. This function may be performed by the user. In other words, the user may determine whether a plurality of estimated infection times are appropriate, and may select an appropriate infection time among the plurality of the estimated infection time. In this manner, the infection time is estimated with high accuracy in the infection occurrence estimation unit 140.

### ((Machine Learning Unit))

The machine learning unit 150 has a function of performing machine learning of environment information at the infection time estimated by the infection occurrence estimation unit 140 to construct a infection prediction model for predicting a current or future infection probability. In the infection occurrence estimation unit 140, the infection time is estimated, so that information on which factor in the environment information causes the infection and other information with respect to the infection leading to the disease onset are accumulated. By performing machine learning of environment information that causes such the infection to occur, the machine learning unit 150 can construct an infection prediction model indicating a relation between each factor in the environment information and the infection.

The machine learning unit 150 constructs an infection prediction model, and further outputs the infection prediction model to the storage unit 120. The infection prediction model stored in the storage unit 120 is used for an infection prediction of the crop, as appropriate.

### ((Infection Occurrence Prediction Unit))

The infection occurrence prediction unit 160 has a function of predicting the infection probability using the infection prediction model stored in the storage unit 120, and a current value or a prediction value of environment information on the crop. Herein, the environment information on the crop is environment information on a crop in which a disease onset of a pest is predicted, and may be environment information output from at least either one of environment information output by the cultivation sensor 300 and environment information output by the weather server 400.

The current value or the prediction value indicates current environment information on the crop or predicted environment information. For example, the current value may be environment information that is continuously acquired by the cultivation sensor 300 to the present, and may be environment information that is periodically updated and acquired. Moreover, the current value may be acquired as appropriate in response to an instruction or the like by the information processing device 100 or the user, without being periodically updated. Moreover, the prediction value indicates future environment information later than the current value, and indicates a prediction value after several hours, after several days, after several weeks, and the like from the present. For example, a prediction value of environment information indicates a weather forecast or the like that is output from the weather server 400.

The infection occurrence prediction unit 160 predicts the probability of the occurrence of infection using a current value or a prediction value of environment information described above. The infection probability may be the infection probability at an arbitrary time point with respect to a temporal change in the crop or may be the continuous infection probability corresponding to the temporal change. Moreover, in addition to the probability, whether infection is occurred may be predicted. Note that, an infection probability may be predicted with respect to the past.

Moreover, the infection occurrence prediction unit 160 may calculate an infection probability for every type of the pest. Accordingly, infection probabilities with respect to a plurality of pests can be predicted, so that it is possible to enhance measures against the pests.

The infection occurrence prediction unit 160 further has a function of outputting the predicted infection probability to the information processing terminal 200. In the information processing terminal 200, for example, the infection probability is displayed on the display unit 230, and is shown to the user. The user can check the infection probability in the information processing terminal 200, and can plan spraying or the like of a chemical agent such as an agricultural chemical. Moreover, the output destination of the infection probability is not limited to the information processing terminal 200, but may be a plurality of information processing terminals.

### <3. Operation Flow>

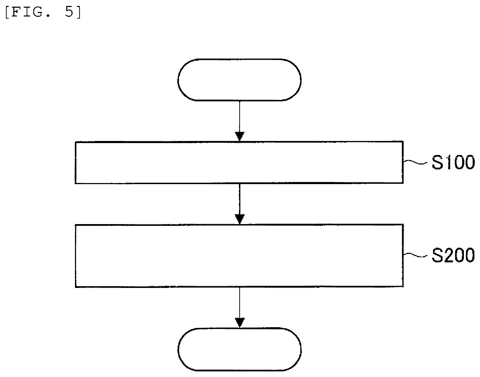

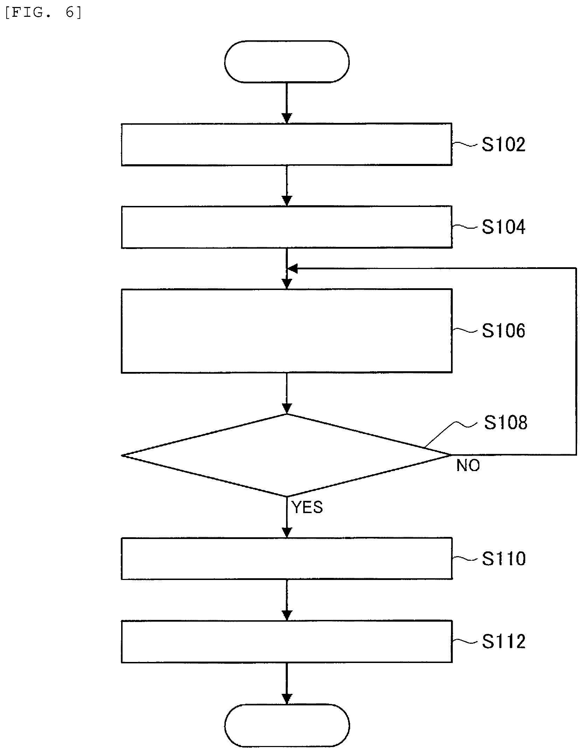

In the foregoing, the function configuration of the information processing system 1 has been described. Next, with reference to Figs. 5 to 7 , an operation flow of the information processing system 1 will be described.

The information processing system 1 roughly performs two processes. In other words, the information processing system 1 firstly constructs an infection prediction model (S100), and then predicts an infection probability using the constructed infection prediction model (S200). Hereinafter, respective operation flows will be described in details.

### (Construction of Infection Prediction Model)

When an infection prediction model is constructed, the acquisition unit 110 of the information processing device 100 firstly acquires pest occurrence information and environment information (S102). The pest occurrence information includes information indicating a disease onset date and time, and is acquired by the information processing device 100 via the information processing terminal 200 and the like. The environment information is, for example, information output by the cultivation sensor 300 disposed in a cultivation environment for a crop or the weather server 400, and can be acquired by the information processing device 100 via at least either one of the cultivation sensor 300 and the weather server 400.

Next, the estimated infection period determination unit 130 of the information processing device 100 determines an estimated infection period and an infection-free period (S104). The estimated infection period is a period including a period during which at least one disease damage infection of the crop occurs, and the infection-free period is a period during which no infection is recognized.

Herein, the estimated infection period determination unit 130 performs assignment of Bag numbers to a plurality pieces of environment information in the estimated infection period and in the infection-free period, for example, and provides a PositiveBag (PB) number to the environment information corresponding to the estimated infection period and provides a NegativeBag (NB) number to the environment information corresponding to the infection-free period.

When environment information NB corresponding to the infection-free period is selected, from a history of disease damage occurrence information in which a disease onset of a pest that is a target of the construction of the infection prediction model has been recognized, environment information corresponding to the infection-free period is assigned with the NB number. At this time, by using pest occurrence information reported by a plurality of farming households as pest occurrence information, it is possible to increase the number of NBs and to enhance the accuracy of the infection prediction model. For example, environment information in the infection-free period based on the disease damage occurrence information in a given farming household is assigned with NB1, and environment information in the infection-free period based on the disease damage occurrence information in another farming household is assigned with NB2. In this manner, environment information in the infection-free period corresponding to a crop of the same type of a crop in which infection is predicted, and infection caused by a pest of the same type as a pest in which infection is predicted is assigned with an NB number, and with the designation of the NB number, an infection time is estimated in next processing.

Next, the infection occurrence estimation unit 140 compares the environment information in the estimated infection period with the environment information in the infection-free period, and estimates an infection time in the estimated infection period (S106). The environment information assigned with the PB number and the environment information assigned with the NB number are compared with each other to extract a feature amount in which infection occurs, thereby estimating the infection time.

The infection occurrence estimation unit 140 further determines whether the estimated infection time has been appropriately estimated (S108). For example, this determination may be performed by checking the estimated infection time by the user.

If the estimated infection time is appropriate (S108/Yes), the operation is shifted to next processing. On the other hand, if the estimated infection time is inappropriate (S108/No), the infection occurrence estimation unit 140 may again compare the environment information in the estimated infection period with the environment information in the infection-free period, and estimate an infection time.

Note that, the estimated infection time being inappropriate includes a case where a plurality of estimated infection times are present in the estimated infection period, a case where in the estimation of an infection time, when a threshold value range is set as a range in which the probability of the infection is appropriate, the infection probability is deviated from the threshold value range, and other cases.

Next, the infection occurrence estimation unit 140 performs fixing processing of the estimated infection time (S110). If the infection time estimated in the previous processing is appropriate (S108/Yes), the fixing processing of the infection time is performed without any change. On the other hand, if the estimated infection time is inappropriate (S108/No), without again estimating an infection time, from the estimated infection time, the user or the like may select the infection time with the highest certainty of the infection, and fix the infection time.

Next, the machine learning unit 150 performs machine learning of environment information at the infection time in the estimation of the infection time, and constructs an infection prediction model (S112).

### (Infection Prediction Using Infection Prediction Model)

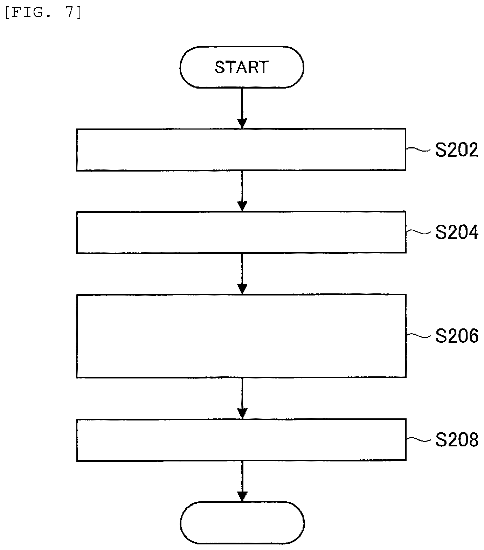

In the foregoing, the operation flow before the infection prediction model is constructed has been described. Next, pest infection prediction of a crop using the infection prediction model will be described with reference to Fig. 7.

Firstly, the infection occurrence prediction unit 160 acquires an infection prediction model from the storage unit 120 (S202). The infection prediction model constructed by the abovementioned method has been stored in the storage unit 120, and the infection prediction model is output from the storage unit 120 in response to an instruction by the infection occurrence prediction unit 160.

In addition, the infection occurrence prediction unit 160 acquires a current value or a prediction value of the environment information stored in the storage unit 120 (S204) . In the storage unit 120, a current value or a prediction value of the environment information acquired from the cultivation sensor 300 or the weather server 400 is stored, and the current value or the prediction value of the environment information is output from the storage unit 120 in response to an instruction by the infection occurrence prediction unit 160.

Next, the infection occurrence prediction unit 160 predicts an infection probability using the infection prediction model and the current value or the prediction value of the environment information on the crop (S206).

The infection occurrence prediction unit 160 outputs the predicted infection probability (S208). The output destination may be, for example, a terminal owned by the user who needs the infection probability, such as the information processing terminal 200, and may be a terminal, such as a computer or a smartphone.

With the operation flow as the above, the estimation of an infection time is performed with high accuracy in the information processing system 1. In addition, a present and future infection probability to the crop can also be predicted.

### <4. Hardware Configuration Example>

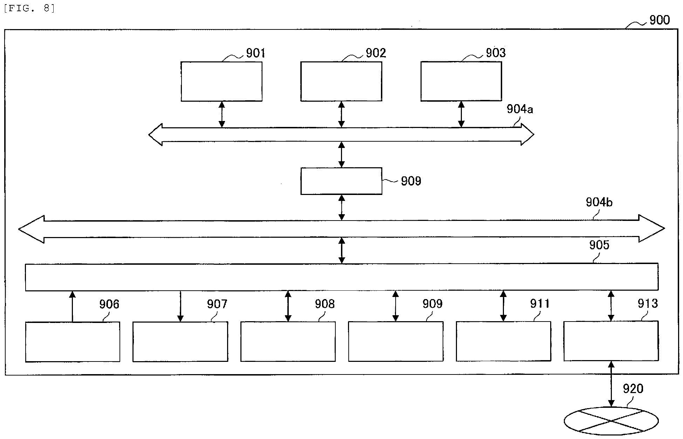

Next, with reference to Fig. 8, a hardware configuration of the information processing device according to the present embodiment will be described. Fig. 8 is a block diagram illustrating one example of a hardware configuration of the information processing system 1 according to the present embodiment. Note that, an information processing device 900 illustrated in Fig. 8 can implement the information processing system 1 illustrated in Fig. 3, for example. The information processing by the information processing system 1 according to the present embodiment is implemented by the cooperation of software and hardware, which will be described below.

As illustrated in Fig. 8, the information processing device 900 is provided with a central processing unit (CPU) 901, a read only memory (ROM) 902, a random access memory (RAM) 903, and a host bus 904a. Moreover, the information processing device 900 is provided with a bridge 904, an external bus 904b, an interface 905, an input device 906, an output device 907, a storage device 908, a drive 909, a connection port 911, and a communication device 913. The information processing device 900 may include, in place of or with the CPU 901, a processing circuit such as an electric circuit, a digital signal processor (DSP), or an application specific integrated circuit (ASIC).

The CPU 901 functions as a computing processing device and a control device, and controls the whole operations in the information processing device 900 in accordance with various kinds of programs. Moreover, the CPU 901 may be a micro processor. The ROM 902 stores therein a program, a computing parameter, and the like to be used by the CPU 901. The RAM 903 temporarily stores therein a program to be used in the execution by the CPU 901, and a parameter or the like that changes as appropriate in the execution. The CPU 901 can execute, for example, the function of the information processing device 100 or the information processing terminal 200 illustrated in Fig. 3 .

The CPU 901, the ROM 902, and the RAM 903 are mutually connected via the host bus 904a including a CPU bus and the like. The host bus 904a is connected to the external bus 904b, such as a peripheral component interconnect/interface (PCI) bus via the bridge 904. Note that, the host bus 904a, the bridge 904, and the external bus 904b are not necessarily to be configured separately, but these functions may be mounted on one bus.

The input device 906 is implemented by, for example, a device to which information is input by the user, such as a mouse, a key board, a touch panel, a button, a microphone, a switch, and a lever. Moreover, the input device 906 may be, for example, a remote control device that utilizes infrared rays or other radio waves, or may be an external connection device such as a mobile telephone or a personal digital assistant (PDA) that corresponds to the operation of the information processing device 900. In addition, the input device 906 may include, for example, an input control circuit that generates an input signal based on the information input by the user using the abovementioned input unit, and outputs the input signal to the CPU 901. The user of the information processing device 900 can, by operating the input device 906, input various kinds of data or instruct a processing operation, with respect to the information processing device 900. The input device 906 may correspond to the input unit 210 of the information processing terminal 200 illustrated in Fig. 3.

The output device 907 includes a device capable of visually or auditorily notifying the user of the acquired information. Such a device includes a display device such as a cathode ray tube (CRT) display device, a liquid crystal display device, a plasma display device, an electroluminescence (EL) display device, a laser-projector, an LED projector, and a lamp, and a voice output device such as a speaker and a headphone. The output device 907 outputs, for example, a result obtained by various kinds of processes performed by the information processing device 900. Specifically, the output device 907 visually displays a result obtained by various kinds of processes performed by the information processing device 900, in various forms, such as a text, an image, a table, or a graph. On the other hand, in a case where the voice output device is used, the output device 907 auditorily outputs the result by converting an audio signal including reproduced voice data, acoustic data, and the like into an analog signal. The output device 907 can execute, for example, the function of the display unit 230 of the information processing terminal 200 illustrated in Fig. 3.

The storage device 908 is a device for storing data formed as one example of a storage unit of the information processing device 900. The storage device 908 is implemented by, for example, a magnetic storage unit device such as a hard disk drive (HDD), a semiconductor storage device, an optical storage device, a magneto-optical storage device, and the like. The storage device 908 may include a storage medium, a recording device that records data in the storage medium, a reading device that reads data from the storage medium, a deleting device that deletes the data recorded in the storage medium, and the like. The storage device 908 stores therein a program or various kinds of data to be executed by the CPU 901, externally acquired various kinds of data, and the like. The storage device 908 can execute, for example, the function of the storage unit 120 of the information processing device 100 illustrated in Fig. 3.

The drive 909 is a reader/writer for a storage medium, and is internally or externally attached to the information processing device 900. The drive 909 reads information recorded in the mounted removable storage medium, such as a magnetic disk, an optical disk, a magneto-optical disk, a semiconductor memory, and outputs the information to the RAM 903. Moreover, the drive 909 also can write information to the removable storage medium.

The connection port 911 is an interface to be connected to an external device, and is a connection port with an external device that allows data transmission by a universal serial bus (USB), for example.

The communication device 913 is, for example, a communication interface including a communication device or the like for the connection to a network 920. The communication device 913 is, for example, a wired or wireless local area network (LAN), a long term evolution (LTE), Bluetooth (registered trademark), or a communication card for wireless USB (WUSB). Moreover, the communication device 913 may be a router for optical communication, a router for an asymmetric digital subscriber line (ADSL), or a modem or the like for various kinds of communication. The communication device 913 can, for example, transmit and receive signals to and from the Internet and another communication device, in accordance with a prescribed protocol such as TCP/IP, for example. The communication device 913 can execute, for example, the function of the communication unit 220 of the cultivation sensor 300, the communication unit 220 of the information processing terminal 200, and the like in Fig. 3.

Note that, the network 920 is a wired or wireless transmission line of information transmitted from the devices connected to the network 920. For example, the network 920 may include a public network such as the Internet, a telephone network, or a satellite communication network, various kinds of local area networks (LANs) including Ethernet (registered trademark), a wide area network (WAN), and the like. Moreover, the network 920 may include a dedicated network such as an Internet protocol-virtual private network (IP-VPN).

Moreover, it is possible to create a computer program for causing the hardware such as the CPU, the ROM, and the RAM that are internally attached to the information processing system 1 to exhibit functions similar to the abovementioned respective configurations of the information processing system 1 according to the present embodiment. Moreover, a recording medium in which the computer program is stored is also provided.

### <5. Modification Example>

In the foregoing, in the present invention, in a case where the occurrence of an event leading to damage to the crop is estimated, the occurrence of a pest has been mainly explained as an example. The present invention is not limited to the example, but is applicable to an example in which the occurrence of damage and the occurrence of an event leading to damage do not simultaneously occur. Specifically, the present invention can be used to an animal infection disease, the occurrence of animal food poisoning, and the like.

### (Animal Infection Disease)

In the present embodiment, the example in which a pest occurs in a crop has been described with the example, however, the present invention is specifically applicable to the designation of an infection date and time when an infection disease occurs to an animal. Before the infection disease occurs on the animal, the infection of an infection disease occurs, and through an incubation period of the infection disease, the infection disease occurs. In a case of the animal infection disease, taking a medical agent before the occurrence of disease, specially just before and after the infection exhibits a higher infection disease inhibitory effect than after the infection disease occurs, in many cases. Therefore, in terms of growing animals, it is important to predict an infection probability.

In a case where the present invention is applied to an animal infection disease, infection disease occurrence information including an occurrence time of damage to an animal, in other words, an infection disease occurrence date and time and environment information including an animal growth environment are acquired. By using the infection disease occurrence information, a period during which an infection disease is suspected to infect the animal is set as an estimated event occurrence period, and a period during which no infection is suspected is set as an event-free period.

By comparing growth environment information between the estimated event occurrence period and the event-free period with each other, a feature amount that may serve as a factor to be infected with the infection disease is extracted from the growth environment information. By using this feature amount, an event occurrence time is estimated from the estimated event occurrence period.

### (Occurrence of Animal Food Poisoning)

The present invention is applicable to, when food poisoning has occurred in an animal, the designation of cause food, the designation of poison intake timing, or the like. Before the food poisoning disease occurs in the animal, intake of food poisoning and the growth of viruses or bacteria that cause food poisoning have occurred. In a case where the growth exceeds a threshold value, a symptom of food poisoning with respect to the animal occurs. In a case of food poisoning, the possibility of moderating or suppressing the symptom of food poisoning becomes high by taking a medical agent before the growth of viruses, bacteria, or the like. Moreover, the medical agent to be taken varies depending on the cause of food poisoning, so that it is important to designate the cause of food poisoning for moderating the symptom.

In a case where the present invention is applied to the animal food poisoning, the time when the food poisoning occurs is set as the occurrence time of damage. In other words, food poisoning occurrence information including a date and time of the occurrence of food poisoning and intake information in which the animal takes in food or the like are acquired. By using this food poisoning occurrence information, a period during which food or the like that causes food poisoning is suspected to be taken in is set as an estimated event occurrence period, and a period of no intake is suspected is set as an event-free period.

By comparing intake information between the estimated event occurrence period and the event-free period with each other, a feature amount that causes food poisoning, in other words, food or the like, is extracted from the intake information. By using this feature amount, an event occurrence time can be estimated from the estimated event occurrence period.

In the foregoing, with reference to the attached drawings, the preferred embodiment of the present invention has been described in details, however, the present invention is not limited to this example. It is apparent that persons skilled in the art to which the present invention belongs could conceive of various kinds of variations or modifications within the scope described in the claims, and it is understood that these variations or modifications apparently fall within the technical scope of the present invention.

### Reference Signs List

- 100:: Information processing device
- 110:: Acquisition unit
- 120:: Storage unit
- 130:: Estimated infection period determination unit
- 140:: Infection occurrence estimation unit
- 150:: Machine learning unit
- 160:: Infection occurrence prediction unit
- 200:: Information processing terminal
- 210:: Input unit
- 220:: Communication unit
- 230:: Display unit
- 300:: Cultivation sensor
- 310:: Sensor unit
- 320:: Communication unit
- 400:: Weather server

## Claims

1. An information processing device comprising:
an acquisition unit that acquires pest occurrence information including information on an occurrence time of damage to a crop caused by a pest and environment information including a cultivation environment for the crop;
an event period determining unit that determines, using the pest occurrence information, an estimated event occurrence period during which an event leading to the occurrence of the damage to the crop is suspected to have occurred and an event-free period during which the event leading to the occurrence of the damage has not occurred; and
an event estimation unit that estimates, by comparing the environment information in the estimated event occurrence period with the environment information in the event-free period, an event occurrence time when the event has occurred from the estimated event occurrence period;
wherein the event estimation unit extracts a feature amount that influences the occurrence of the damage, from the environment information in the estimated event occurrence period and
wherein an event occurrence probability of occurrence of the event in the estimated event occurrence period is calculated using the feature amount, and
the event occurrence time is estimated, based on the event occurrence probability;
further comprising a machine learning unit that constructs, by performing machine learning to the environment information estimated by the event estimation unit in the event occurrence time, an event occurrence prediction model for predicting the event occurrence probability;
wherein the event occurrence probability is used to plan spraying of a chemical agent.

2. The information processing device according to Claim 1, wherein the estimated event occurrence period is a period earlier than the occurrence time of the damage to the crop, and includes at least one period including the event occurrence time.

3. The information processing device according to Claim 2, wherein the event occurrence probability of the crop is predicted using the event occurrence prediction model, and a current value or a prediction value of the environment information on the crop.

4. The information processing device according to Claim 3, further comprising an output unit that outputs the event occurrence probability for every type of the pest.

5. A program comprising instructions which, when the program is executed by a computer, cause the computer to function as:
an acquisition unit that acquires pest occurrence information including information on an occurrence time of damage to a crop caused by a pest and environment information including an cultivation environment for the crop;
an event period determining unit that determines, using the pest occurrence information, an estimated event occurrence period during which an event leading to the occurrence of the damage to the crop is suspected to have occurred and an event-free period during which the event leading to the occurrence of the damage has not occurred; and
an event estimation unit that estimates, by comparing the environment information in the estimated event occurrence period with the environment information in the event-free period, an event occurrence time when the event has occurred from the estimated event occurrence period;
wherein the event estimation unit extracts a feature amount that influences the occurrence of the damage, from the environment information in the estimated event occurrence period and
wherein an event occurrence probability of occurrence of the event in the estimated event occurrence period is calculated using the feature amount, and
the event occurrence time is estimated, based on the event occurrence probability;
a machine learning unit that constructs, by performing machine learning to the environment information estimated by the event estimation unit in the event occurrence time, an event occurrence prediction model for predicting the event occurrence probability;
wherein the event occurrence probability is used to plan spraying of a chemical agent.

6. An information processing system comprising:
an acquisition unit that acquires pest occurrence information including information on an occurrence time of damage to a crop caused by a pest and environment information including an cultivation environment for the crop;
an event period determining unit that determines, using the pest occurrence information, an estimated event occurrence period during which an event leading to the occurrence of the damage to the crop is suspected to have occurred and an event-free period during which the event leading to the occurrence of the damage has not occurred; and
an event estimation unit that estimates, by comparing the environment information in the estimated event occurrence period with the environment information in the event-free period, an event occurrence time when the event has occurred from the estimated event occurrence period;
wherein the event estimation unit extracts a feature amount that influences the occurrence of the damage, from the environment information in the estimated event occurrence period and
wherein an event occurrence probability of occurrence of the event in the estimated event occurrence period is calculated using the feature amount, and
the event occurrence time is estimated, based on the event occurrence probability;
a machine learning unit that constructs, by performing machine learning to the environment information estimated by the event estimation unit in the event occurrence time, an event occurrence prediction model for predicting the event occurrence probability;
wherein the event occurrence probability is used to plan spraying of a chemical agent.

## Patentansprüche

1. Informationsverarbeitungsvorrichtung, umfassend:
eine Erfassungseinheit, die Schädlingsbefallinformationen, einschließlich Informationen über einen Zeitpunkt des Auftritts von durch einen Schädling verursachten Schäden an einer Kulturpflanze und Umgebungsinformationen, einschließlich einer Anbauumgebung für die Kulturpflanze, erfasst;
eine Ereignisperiodenbestimmungseinheit, die unter Verwendung der Schädlingsbefallinformationen eine geschätzte Ereignisauftrittsperiode, während der der Auftritt eines Ereignisses, das zum Auftritt des Schadens an der Kulturpflanze führt, vermutet wird, und eine ereignisfreie Periode, während der das Ereignis, das zum Auftritt des Schadens führt, nicht aufgetreten ist, bestimmt; und
eine Ereignisschätzeinheit, die durch Vergleichen der Umgebungsinformationen in der geschätzten Ereignisauftrittsperiode mit den Umgebungsinformationen in der ereignisfreien Periode eine Ereignisauftrittszeit schätzt, wenn das Ereignis aus der geschätzten Ereignisauftrittsperiode aufgetreten ist;
wobei die Ereignisschätzeinheit einen Merkmalswert, der den Auftritt des Schadens beeinflusst, aus den Umgebungsinformationen in der geschätzten Ereignisauftrittsperiode extrahiert und
wobei eine Ereignisauftrittswahrscheinlichkeit des Auftritts des Ereignisses in der geschätzten Ereignisauftrittsperiode unter Verwendung des Merkmalswerts berechnet wird und
die Ereignisauftrittszeit basierend auf der Ereignisauftrittswahrscheinlichkeit geschätzt wird;
ferner umfassend eine Maschinenlerneinheit, die durch Durchführen von maschinellem Lernen an den Umgebungsinformationen, die durch die Ereignisschätzeinheit in der Ereignisauftrittszeit geschätzt werden, ein Ereignisauftrittsvorhersagemodell zum Vorhersagen der Ereignisauftrittswahrscheinlichkeit konstruiert;
wobei die Ereignisauftrittswahrscheinlichkeit verwendet wird, um das Sprühen eines chemischen Mittels zu planen.

2. Informationsverarbeitungsvorrichtung nach Anspruch 1, wobei die geschätzte Ereignisauftrittsperiode eine Periode vor der Auftrittszeit des Schadens an der Kulturpflanze ist und mindestens eine Periode, einschließlich der Ereignisauftrittszeit, einschließt.

3. Informationsverarbeitungsvorrichtung nach Anspruch 2, wobei die Ereignisauftrittswahrscheinlichkeit der Kulturpflanze unter Verwendung des Ereignisauftrittsvorhersagemodells und eines aktuellen Werts oder eines Vorhersagewerts der Umgebungsinformationen über die Kulturpflanze vorhergesagt wird.

4. Informationsverarbeitungsvorrichtung nach Anspruch 3, ferner umfassend eine Ausgabeeinheit, die die Ereignisauftrittswahrscheinlichkeit für jeden Typ des Schädlings ausgibt.

5. Programm, das Anweisungen umfasst, die, wenn das Programm durch einen Computer ausgeführt wird, bewirken, dass der Computer funktioniert als:
eine Erfassungseinheit, die Schädlingsbefallinformationen, einschließlich Informationen über einen Zeitpunkt des Auftritts von durch einen Schädling verursachten Schäden an einer Kulturpflanze und Umgebungsinformationen, einschließlich einer Anbauumgebung für die Kulturpflanze, erfasst;
eine Ereignisperiodenbestimmungseinheit, die unter Verwendung der Schädlingsbefallinformationen eine geschätzte Ereignisauftrittsperiode, während der der Auftritt eines Ereignisses, das zum Auftritt des Schadens an der Kulturpflanze führt, vermutet wird, und eine ereignisfreie Periode, während der das Ereignis, das zum Auftritt des Schadens führt, nicht aufgetreten ist, bestimmt; und
eine Ereignisschätzeinheit, die durch Vergleichen der Umgebungsinformationen in der geschätzten Ereignisauftrittsperiode mit den Umgebungsinformationen in der ereignisfreien Periode eine Ereignisauftrittszeit schätzt, wenn das Ereignis aus der geschätzten Ereignisauftrittsperiode aufgetreten ist;
wobei die Ereignisschätzeinheit einen Merkmalswert, der den Auftritt des Schadens beeinflusst, aus den Umgebungsinformationen in der geschätzten Ereignisauftrittsperiode extrahiert und
wobei eine Ereignisauftrittswahrscheinlichkeit des Auftritts des Ereignisses in der geschätzten Ereignisauftrittsperiode unter Verwendung des Merkmalswerts berechnet wird und
die Ereignisauftrittszeit basierend auf der Ereignisauftrittswahrscheinlichkeit geschätzt wird;
eine Maschinenlerneinheit, die durch Durchführen von maschinellem Lernen an den Umgebungsinformationen, die durch die Ereignisschätzeinheit in der Ereignisauftrittszeit geschätzt werden, ein Ereignisauftrittsvorhersagemodell zum Vorhersagen der Ereignisauftrittswahrscheinlichkeit konstruiert;
wobei die Ereignisauftrittswahrscheinlichkeit verwendet wird, um das Sprühen eines chemischen Mittels zu planen.

6. Informationsverarbeitungssystem, umfassend:
eine Erfassungseinheit, die Schädlingsbefallinformationen, einschließlich Informationen über einen Zeitpunkt des Auftritts von durch einen Schädling verursachten Schäden an einer Kulturpflanze und Umgebungsinformationen, einschließlich einer Anbauumgebung für die Kulturpflanze, erfasst;
eine Ereignisperiodenbestimmungseinheit, die unter Verwendung der Schädlingsbefallinformationen eine geschätzte Ereignisauftrittsperiode, während der der Auftritt eines Ereignisses, das zum Auftritt des Schadens an der Kulturpflanze führt, vermutet wird, und eine ereignisfreie Periode, während der das Ereignis, das zum Auftritt des Schadens führt, nicht aufgetreten ist, bestimmt; und
eine Ereignisschätzeinheit, die durch Vergleichen der Umgebungsinformationen in der geschätzten Ereignisauftrittsperiode mit den Umgebungsinformationen in der ereignisfreien Periode eine Ereignisauftrittszeit schätzt, wenn das Ereignis aus der geschätzten Ereignisauftrittsperiode aufgetreten ist;
wobei die Ereignisschätzeinheit einen Merkmalswert, der den Auftritt des Schadens beeinflusst, aus den Umgebungsinformationen in der geschätzten Ereignisauftrittsperiode extrahiert und
wobei eine Ereignisauftrittswahrscheinlichkeit des Auftritts des Ereignisses in der geschätzten Ereignisauftrittsperiode unter Verwendung des Merkmalswerts berechnet wird und
die Ereignisauftrittszeit basierend auf der Ereignisauftrittswahrscheinlichkeit geschätzt wird;
eine Maschinenlerneinheit, die durch Durchführen von maschinellem Lernen an den Umgebungsinformationen, die durch die Ereignisschätzeinheit in der Ereignisauftrittszeit geschätzt werden, ein Ereignisauftrittsvorhersagemodell zum Vorhersagen der Ereignisauftrittswahrscheinlichkeit konstruiert;
wobei die Ereignisauftrittswahrscheinlichkeit verwendet wird, um das Sprühen eines chemischen Mittels zu planen.

## Revendications

1. Dispositif de traitement d'informations, comprenant :
une unité d'acquisition qui acquiert informations d'apparition de parasite incluant des informations sur un moment d'apparition de dégâts d'une culture causés par un parasite et des informations d'environnement incluant un environnement cultural pour la culture ;
une unité de détermination de période d'événement qui détermine, en utilisant les informations d'apparition de parasite, une période d'apparition d'événement estimée durant laquelle un événement conduisant à l'apparition des dégâts de la culture est suspecté être apparu et une période dépourvue d'événement durant laquelle l'événement conduisant à l'apparition des dégâts n'est pas apparu ; et
une unité d'estimation d'événement qui estime, en comparant les informations d'environnement pendant la période d'apparition d'événement estimée aux informations d'environnement pendant la période dépourvue d'événement, un moment d'apparition d'événement auquel l'événement est apparu, à partir de la période d'apparition d'événement estimée ;
dans lequel l'unité d'estimation d'événement extrait une quantité caractéristique qui influence l'apparition des dégâts, à partir des informations d'environnement pendant la période d'apparition d'événement estimée et
dans lequel une probabilité d'apparition d'événement de l'apparition de l'événement pendant la période d'apparition d'événement estimée est calculée en utilisant la quantité caractéristique, et
le moment d'apparition d'événement est estimé, sur la base de la probabilité d'apparition d'événement ;
comprenant en outre une unité d'apprentissage machine qui construit, en réalisant un apprentissage machine par rapport aux informations d'environnement estimées par l'unité d'estimation d'événement pendant le moment d'apparition d'événement, un modèle de prédiction d'apparition d'événement pour prédire la probabilité d'apparition d'événement ;
dans lequel la probabilité d'apparition d'événement est utilisée pour planifier une pulvérisation d'un agent chimique.

2. Dispositif de traitement d'informations selon la revendication 1, dans lequel la période d'apparition d'événement estimée est une période antérieure au moment d'apparition des dégâts de la culture, et inclut au moins une période incluant le moment d'apparition d'événement.

3. Dispositif de traitement d'informations selon la revendication 2, dans lequel la probabilité d'apparition d'événement de la culture est prédite en utilisant le modèle de prédiction d'apparition d'événement, et une valeur actuelle ou une valeur de prédiction des informations d'environnement sur la culture.

4. Dispositif de traitement d'informations selon la revendication 3, comprenant en outre une unité de sortie qui produit en sortie la probabilité d'apparition d'événement pour chaque type du parasite.

5. Programme comprenant des instructions qui, lorsque le programme est exécuté par un ordinateur, amènent l'ordinateur à fonctionner en tant que :
une unité d'acquisition qui acquiert des informations d'apparition de parasite incluant des informations sur un moment d'apparition de dégâts d'une culture causés par un parasite et des informations d'environnement incluant un environnement cultural pour la culture ;
une unité de détermination de période d'événement qui détermine, en utilisant les informations d'apparition de parasite, une période d'apparition d'événement estimée durant laquelle un événement conduisant à l'apparition des dégâts de la culture est suspecté être apparu et une période dépourvue d'événement durant laquelle l'événement conduisant à l'apparition des dégâts n'est pas apparu ; et
une unité d'estimation d'événement qui estime, en comparant les informations d'environnement pendant la période d'apparition d'événement estimée aux informations d'environnement pendant la période dépourvue d'événement, un moment d'apparition d'événement auquel l'événement est apparu, à partir de la période d'apparition d'événement estimée ;
dans lequel l'unité d'estimation d'événement extrait une quantité caractéristique qui influence l'apparition des dégâts, à partir des informations d'environnement pendant la période d'apparition d'événement estimée et
dans lequel une probabilité d'apparition d'événement de l'apparition de l'événement pendant la période d'apparition d'événement estimée est calculée en utilisant la quantité caractéristique, et
le moment d'apparition d'événement est estimé, sur la base de la probabilité d'apparition d'événement ;
une unité d'apprentissage machine qui construit, en réalisant un apprentissage machine par rapport aux informations d'environnement estimées par l'unité d'estimation d'événement pendant le moment d'apparition d'événement, un modèle de prédiction d'apparition d'événement pour prédire la probabilité d'apparition d'événement ;
dans lequel la probabilité d'apparition d'événement est utilisée pour planifier une pulvérisation d'un agent chimique.

6. Système de traitement d'informations, comprenant :
une unité d'acquisition qui acquiert des informations d'apparition de parasite incluant des informations sur un moment d'apparition de dégâts d'une culture causés par un parasite et des informations d'environnement incluant un environnement cultural pour la culture ;
une unité de détermination de période d'événement qui détermine, en utilisant les informations d'apparition de parasite, une période d'apparition d'événement estimée durant laquelle un événement conduisant à l'apparition des dégâts de la culture est suspecté être apparu et une période dépourvue d'événement durant laquelle l'événement conduisant à l'apparition des dégâts n'est pas apparu ; et
une unité d'estimation d'événement qui estime, en comparant les informations d'environnement pendant la période d'apparition d'événement estimée aux informations d'environnement pendant la période dépourvue d'événement, un moment d'apparition d'événement auquel l'événement est apparu, à partir de la période d'apparition d'événement estimée ;
dans lequel l'unité d'estimation d'événement extrait une quantité caractéristique qui influence l'apparition des dégâts, à partir des informations d'environnement pendant la période d'apparition d'événement estimée et
dans lequel une probabilité d'apparition d'événement de l'apparition de l'événement pendant la période d'apparition d'événement estimée est calculée en utilisant la quantité caractéristique, et
le moment d'apparition d'événement est estimé, sur la base de la probabilité d'apparition d'événement ;
une unité d'apprentissage machine qui construit, en réalisant un apprentissage machine par rapport aux informations d'environnement estimées par l'unité d'estimation d'événement pendant le moment d'apparition d'événement, un modèle de prédiction d'apparition d'événement pour prédire la probabilité d'apparition d' événement ;
dans lequel la probabilité d'apparition d'événement est utilisée pour planifier une pulvérisation d'un agent chimique.
